# EUROPEAN PATENT APPLICATION

(11) **EP 1 202 514 A1**
(43) Date of publication of application: **02.05.2002**
(21) Application number: 00402975.7
(22) Date of filing: 26.10.2000
(51) Int. Cl.: H04L 27/26, H04L 5/06, H04L 5/02

(54) **Multicarrier GSM receiver**

(71) Applicant: ALCATEL, 75008 Paris (FR)
(72) Inventor: Parisel, Arnaud, 75017 Paris (FR); Dugast, Xavier, 78400 Chatou (FR)
(74) Representative: Lamoureux, Bernard

(57) **Abstract**

Method and system for processing multicarrier radio communications applications, particularly in Global System for Mobile Communication (GSM). The invention is characterized by the transposition of a multicarrier spectrum (S) in a base-band, and the processing of each carrier (12; 14) independently using one single RF phase-locked loop (35) common in the present single-carrier terminals. According to an embodiment of the invention, the processing of each carrier independently comprises the transposition of each carrier (12; 14) in base band using the 200 kHz clock (36) generated by the RF PLL of a mobile phone set.

## Description

### FIELD OF THE INVENTION

The present invention relates to a method and system for processing multicarrier channels in digital cellular communication systems, said channels including a plurality of slots transmitted in different carriers, used in cellular digital communication systems wherein typically a mobile phone set is used.

The invention provides substantial hardware simplification in the mobile receiver stage by avoiding the use of additional 200 kHz phase-locked loop (PLL) stages or additional systems for transposing several carriers in base band.

The method is of special application in, but not limited to, the European digital mobile communications system known as GSM, i.e. Global System for Mobile Communications. In the present GSM state-of-the art, the multislot-multicarrier channels, are not used. Nevertheless it is expected that such kind of channels be used in the future, in particular in the GSM-EDGE phase.

### BACKGROUND OF THE INVENTION

Based on the known techniques, a mobile subscriber roams in a cell under the coverage of a base station, in order to enter into the system and be located. Once the location is determined, the mobile subscriber can receive paging messages, or initiate outgoing calls. In the first case, the mobile set answers to the paging, and then the incoming call requirements are sent to the mobile set using the signaling channels of the communication system. If the call is outgoing from the mobile set, the latter indicates the traffic requirements of the channel depending on the characteristics of the call.

In either case, the base station sends back a signal message, with the allocation of the traffic channel. The channel thus allocated includes a carrier identity and a slot identity. Therefore, when the allocation is confirmed, the reception radio stage of the mobile must be tuned to the allocated channel during an assigned time slot. The receiver of the mobile set has a tuner block for tuning to carriers. Thus, the tuner requires a certain interval, namely NxT before it is tuned again to the same carrier, where N is the number of slots and T is the duration of the time slot.

If the required service to complete the call, known as data call, needs more bandwidth than the one served by a single time slot, a multisolt channel can be allocated.

In the latter case, if a multislot channel is transmitted using the same carrier, the receiver may continue to be locked to the carrier during the N slots used. To cope with multicarrier, it is proposed to traspose all the used spectrum around base band. The first carrier will be around 0kHz, the second one around 200kHz and subsequently the nth carrier will be around n*200kHz. Then, it is proposed to use the 200kHz of the RF PLL to transpose the carriers around 0Hz.Then the carriers are processed independently.

### DESCRIPTION OF THE INVENTION

The solution proposed by the present invention is based on the direct transposition of all carriers in base band using the high frecuency PLL of the mobile set, and then process each carrier independently. The invention is further characterized by the use of a clock generated in the RF PLL in order to transpose to base band the different carriers of the spectrum which is used. Said clock in the known GSM systems typically has a frequency of 200 kHz. Furthermore, said spectrum in the case of GSM, is from 935 to 960 MHz, with 124 carriers spaced at 200 kHz intervals. To handle these carriers, the mobile set has an internal clock circuit, known as PLL (Phase Lock Loop), that generates a predetermined frequency, for example 200kHz clock in the case of GSM. Said spectrum is then transposed to a lower band, known as the base band. The first carrier is transposed in base band (centered around 0 kHz), the second centered around 200 kHz, and subsequent carries centered around subsequent 200 kHz intervals. To perform this proccess, the RF PLL is used. Then, all these carriers are transposed around 0Hz using the 200kHz clock generated in the RF PLL.

Once transposed, the carriers are processed independently (series or parallel). The signal is processed and filtered in order to detect the preassigned multislot-multicarrier channels.

Accordingly, one object of the present invention is that providing a method for processing of digital radio channels in multicarrier radio communications applications, said carriers forming a spectrum allocated to be used for communication, and transposition of said spectrum in a base-band characterized in that said transposition is performed using a predetermined high frequency clock.

According to an aspect of the invention, said predetermined high frequency clock is generated in a phase-locked loop stage of a receiver set.

According to an aspect of the invention, the carriers are transposed around 0Hz independently using the 200kHz generated in the RF PLL.

According to another aspect of the invention, each carrier is processed independently comprising the steps of:
- transposition of each carrier in base band using a predetermined high frequency clock; and
- base band filtering.

According to another aspect of the invention said predetermined high frequency is 200 kHz.

Another object of the present invention is that of providing a mobile phone set having a transposer stage adapted for transposing a pre-filtered spectrum of carriers used for communication to a base band using a predetermined high frequency clock.

According to an additional aspect of the invention said mobile phone set includes a phase-locked loop stage for generating said predetermined high frequency clock.

According to yet another aspect of the invention, the mobile phone set generates a high frequency of 200 kHz.

These and other features of the invention are described in further detail hereinbelow as well as in the claims.

### BRIEF DESCRIPTION OF THE DRAWINGS

The present invention will be better understood by way of the following detailed description and the aid of the accompanying figures.

Figure 1 shows a general concept of multicarrier communications.

Figure 2 is a schematic view of a transposition process.

Figure 3 is a schematic block diagram of an example of a preferred embodiment of the invention.

### EXAMPLE OF A PREFERRED EMBODIMENT

As it is known in the related art, a mobile cellular radio communication system comprises a set of base station transceivers (BST ), linked to the network backbone using a number of base station controllers (BSC). The BSCs are linked to the backbone using digital exchanges, or the so called mobile switching centers. The operation of roaming is carried out in a core controller means known as home location register. In each given cell, the mobile subscribers can roam. The BSC is the node that handles the radio resources.

The BSTs use a set of carriers from the ones available in the communications system; for example in the GSM case, from a total of 124 carriers. From these carriers, one is allocated to a respective mobile set in each call, and inside the respective carrier a time slot is assigned as well; for example one out of 8 in the GSM case. The BST, issues allocation messages which are received by the roaming mobile sets. These allocation messages allocate in each of the mobile sets a channel composed by a carrier identity and a slot identity.

From this moment, the mobile will use this channel for voice or data services. By doing so, the tuner module in the reception stage of the mobile set, is commanded so as to filter in the reception path the assigned carrier, in order to detect the assigned time slot and to demodulate the contained information.

The traffic channel in a TDM System, such as GSM, is a time slot inside a carrier. However for data services, a multisolt channel may be assigned. This multislot channel may use the same carrier, and in this case the receiver stage can operate in a similar manner as in the monoslot case, having the tuner locked to the assigned carrier during this multislot period.

In the case of a multicarrier communication, the assigned slot in the different carriers may be the same. In this case, two receiver stages are needed in order to detect both slots simultaneously in the different carriers.

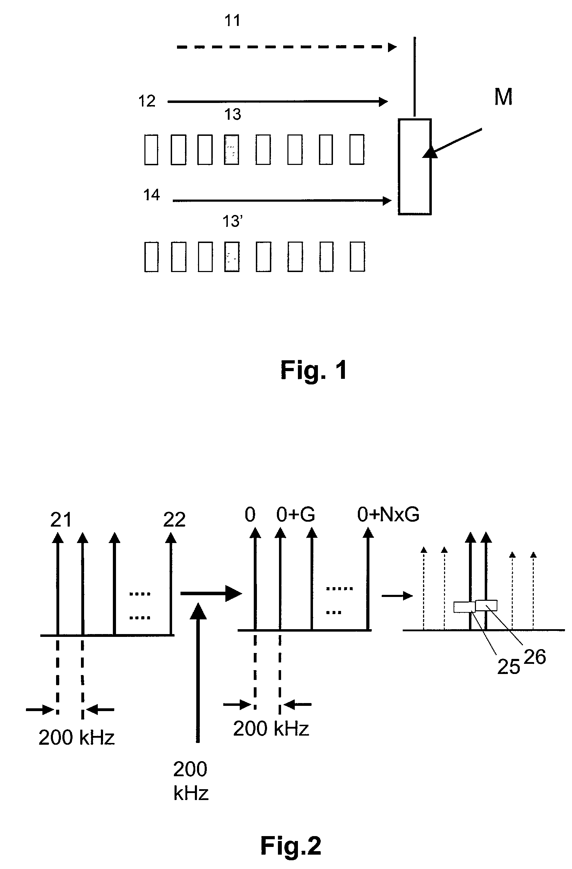

Referring to figure 1, it is known that the mobile phone set M receives an allocation order 11 from a base station in order to use a first channel composed by the slot 13 included in a first carrier 12, and a second channel composed by the slot 13' as well in a second carrier 14. In such case, on the receiver side, the mobile phone set M must then have two receiver stages in order to detect the first slot 13 in carrier 12 and the second slot 13' in carrier 14 simultaneously. As mentioned further above, this situation would give rise to hardware complexity in the receiver stage of the mobile set M so as to provide a useful response. As a consequence of such complexity, the circuitry within the mobile phone set becomes expensive and difficult to miniaturize in size.

According to the solution proposed by the invention, a broad band filter stage is implemented in the receptor stage of the mobile phone set, after the antenna stage.

Referring now to figure 2, it may be noted that the receptor stage by-passes all the spectrum used in the communication system (for example from 935 to 960 MHz in GSM) thus resulting in the spectrum 21-22 as shown in the left hand side of the figure. Then the signal is transposed to base band, this band being a parallel lower frequency band spectrum that begins in 0 Hz. The resulting spectrum 0, 0+G, ..., 0+NxG is shown in the middle part of figure 2 where G represents the width of the frequency channels (or frequency offset) and N the number of carriers. This transposition process, is based on the use of a clock using a predetermined frequency. For example in the case of present GSM systems this frequency is of 200 kHz which is obtained from a conventional clock stage used in the mobile sets.

Once transposed, the signal is processed and filtered within the mobile phone set in order to extract the appropriate transposed carrier, inside of which the allocated slots 25-26 are included. For example, if the multicarrier channel is composed by 2 carriers, the first one is transposed and centered around 0 Hz, and the second one transposed and centered around 200 kHz. This allows that the predetermined frequency, e.g. 200kHz, clock from the RF PLL is used for this second step of the transposition process without the need of using additional hardware.

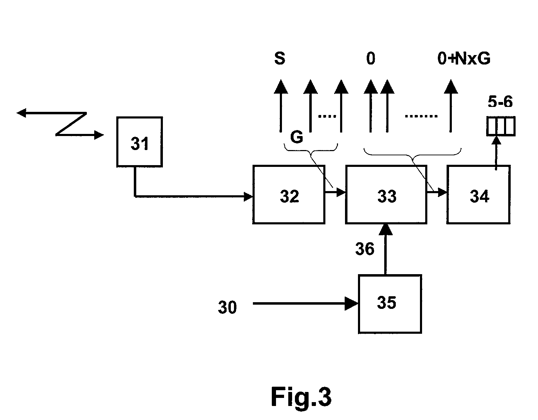

Referring now to figure 3, a block diagram is shown to schematically represent the receiver stage of the mobile phone set. In said figure a duplexor 31 is used to splice the received path from the transmitted path. The received signal is then passed through a broad band filter 32 which passes the complete spectrum S of the signal having the frequency offset G between respective slots. Thereafter, a transposer means 33 transposes the received band to base-band, represented from 0 to 0xNxG in the figure, with N being the number of the carriers and G the frequency offset between two adjacent carriers. This transposer receives as input the predetermined frequency clock 36 (e.g. 200 kHz) generated in the RF PLL 35 of the set. Once transposed, the band is passed through further processing stages 34 in order to filter the allocated carriers, and the allocated slots 5-6 are therefore detected.

Therefore, it is appreciable that the method and the system of the present invention provide a substantial simplification in the overall signal processing of the mobile phone set, and as a consequence, provides a low cost solution.

## Claims

1. Method for processing of digital radio channels in multicarrier radio communications applications, said carriers (12; 14) forming a spectrum (S) allocated to be used for communication, and transposition of said spectrum (S) in a base-band **characterized in that** said transposition is performed using a predetermined high frequency clock (36).

2. Method according to claim 1, wherein said predetermined high frequency clock is generated in a phase-locked loop stage (35) of a receiver set (M).

3. Method of claim 2, wherein, the carriers (12; 14) are transposed around 0Hz independently using a 200kHz frequency generated in the RF PLL.

4. Method according to claim 1, wherein each carrier (12; 14) is processed independently comprising the steps of:
- transposition of each carrier in base band using a predetermined high frequency clock; and
- base band filtering.

5. Method according to any of the previous claims wherein said predetermined high frequency is 200 kHz.

6. A mobile phone set (M) having a transposer stage adapted for transposing a pre-filtered spectrum (S) of carriers (12; 14) used for communication to a base band using a predetermined high frequency clock (36).

7. A mobile phone set according to claim 5, including a phase-locked loop stage (35) for generating said predetermined high frequency clock.

8. A mobile phone set according to claim 6, wherein said high frequency is 200 kHz.
